# EUROPEAN PATENT APPLICATION

(11) **EP 2 924 644 A1**
(43) Date of publication of application: **30.09.2015**
(21) Application number: 15158509.8
(22) Date of filing: 10.03.2015
(51) Int. Cl.: G06Q 50/06, G06Q 10/10, G06Q 10/06

(54) **Gas meter data validation**

(30) Priority: 26.03.2014 US 201414226525
(71) Applicant: Honeywell International Inc., Morristown, NJ 07962-2245 (US)
(72) Inventor: Brahmajosyula, Jagadeesh, Morristown, NJ New Jersey 07962-2245 (US); Reddy, Jaganmohan Y., Morristown, NJ New Jersey 07962-2245 (US); Rush, Robert, Morristown, NJ New Jersey 07962-2245 (US)
(74) Representative: Houghton, Mark Phillip

(57) **Abstract**

Gas meter data validation for a Meter Data Management (MDM) system (100) including a communications network connecting gas data downloading device(s) (110) receiving gas meter data including (201) corrected gas volume data (CGVD) and state variable(s) data from primary gas meter(s) (105 and 106) to the system, and a server (140) implementing gas data validation (GDV) software (140b). The GDV software performs (202) data validation checks on the gas meter data including the CGVD to identify erroneous CGVD, and if a data validation check fails, performs (203) a root cause analysis to diagnose a root cause involved in the erroneous CGVD using the data validation check and additional information regarding the communications network and primary gas meter, and performs (204) error resolution depending on the root cause during the time interval including (i) calculating a revised CGVD after refetching uncorrected GVD and the state variable data or (ii) estimating the state variable data and calculating the revised CGVD therefrom.

## Description

### FIELD

Disclosed embodiments relate to gas meter data validation.

### BACKGROUND

Gas meter data validation deals with verification and, if required, correction of the measured data from gas measurement devices/sensors, so that the measured data reflects the actual value of variables of interest being measured, such as gas flow rate, gas volume, and energy. For a Local Distribution Company (LDC) providing a combustible gas to customers, the gas meter data has a direct influence on its revenue as various customers are billed based on consumption data reflected as corrected gas volume data (CGVD) obtained from gas meter data originating from "primary" gas meters which are positioned at each gas service location. A typical gas provided is natural gas which is known to be primarily methane.

CGVD is also a key input variable required in the computation of several business applications including demand forecasting, gas accounting, and gas allocations. Accordingly, it is important to ensure the accuracy of the CGVD originating from gas data from primary gas meters by verification of the CGVD and correcting/estimating erroneous CGVD when present as early as possible.

### SUMMARY

This Summary is provided to introduce a brief selection of disclosed concepts in a simplified form that are further described below in the Detailed Description including the drawings provided. This Summary is not intended to limit the claimed subject matter's scope.

Disclosed embodiments recognize although for electricity meter data, Verification, Editing and Estimation (VEE) standards have been defined which specify a set of electric meter data validation checks and also estimation methods for use when original electric meter data cannot be used, standards for corrected gas volume data (CGVD) are not available. Moreover, VEE methods for estimating electricity meter data also do not provide any root cause analysis regarding the error source(s) of the electricity measurement problem.

Disclosed embodiments include gas data validation (GDV) software and a GDV system and methods implementing disclosed GDV software that are significantly more comprehensive as compared to known CGVD validation methods as they include more detailed gas data validation checks to identify data errors, and perform diagnosis to identify the root cause of the error. Also, disclosed embodiments can include analyzing various fault scenarios in sub-systems of the Meter Data Management (MDM) system that are involved in the obtaining the data originating from the primary gas meters provided to a MDM server of a MDM system, and incorporate a plurality of checks to detect them.

### BRIEF DESCRIPTION OF THE DRAWINGS

FIG. 1 is an example wireless smart metering and telemetry system schematic which can include disclosed GDV software within a memory of the MDM server of a MDM system, according to an example embodiment.
FIG. 2A is a flow chart that shows steps in an example method of GDV for a MDM system, according to an example embodiment.
FIG. 2B is a flow chart that shows an example detailed flow for a root cause analysis step (step 203) in the method shown in FIG. 2A.
FIG. 3 is an example table showing alarm description information for electronic volume corrector (EVC) alarm codes which can be used as additional information to diagnose the root cause involved in erroneous CGVD data.
FIG. 4 is a table showing example errors that can cause erroneous CGVD data.

### DETAILED DESCRIPTION

Disclosed embodiments are described with reference to the attached figures, wherein like reference numerals are used throughout the figures to designate similar or equivalent elements. The figures are not drawn to scale and they are provided merely to illustrate certain disclosed aspects. Several disclosed aspects are described below with reference to example applications for illustration. It should be understood that numerous specific details, relationships, and methods are set forth to provide a full understanding of the disclosed embodiments.

One having ordinary skill in the relevant art, however, will readily recognize that the subject matter disclosed herein can be practiced without one or more of the specific details or with other methods. In other instances, well-known structures or operations are not shown in detail to avoid obscuring certain aspects. This Disclosure is not limited by the illustrated ordering of acts or events, as some acts may occur in different orders and/or concurrently with other acts or events. Furthermore, not all illustrated acts or events are required to implement a methodology in accordance with the embodiments disclosed herein.

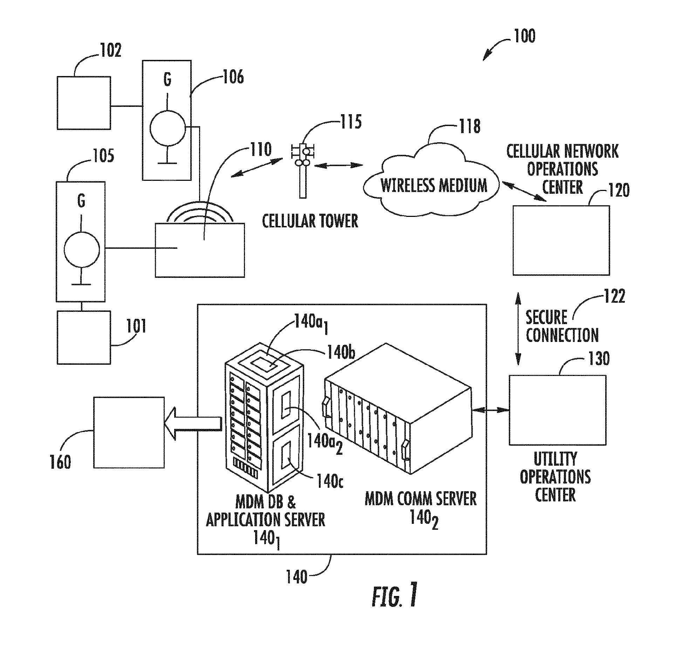

FIG. 1 is an example schematic for a wireless smart metering telemetry MDM system 100 which can include disclosed GDV software according to an example embodiment. MDM server 140 is shown including a MDM database and application server 140₁ having a processor 140c that implements disclosed GDV software 140b residing within a first memory 140a₁ of the MDM database and application server 140₁, and a separate MDM communications server 140₂. The MDM database in the second memory 140a₂ in application server 140₁ is where the gas meter data generally resides and includes uncorrected GVD, CGVD, and the state variables of temperature and pressure for particular intervals of time which collectively provides a historical database which can be stored and processed for use for billing and other applications. Although the first memory 140a₁ and second memory 140a₂ are shown in FIG. 1 as separate memories, they can be provided by a single memory. The MDM database and application server 140₁ is shown in FIG. 1 coupled to a billing, operations and other enterprise applications system 160.

In this non-limiting example gas meter data from gas meters shown as gas meter 105 associated with service location 101 and gas meter 106 associated with service location 102 reaches the MDM communications server 140₂ of MDM server 140 over a communications path including a wireless communications network. Various sub-systems of the MDM system 100 are described based on this non-limiting example.

Gas meters 105 and 106 are shown communicably coupled to a gas data downloading device 110 for downloading consumption and gas meter readings generally including uncorrected GVD, and the state variables received from gas meters including gas meters 105 and 106, typically in for time intervals of no more than on a daily basis, such as on an hourly basis. Gas data downloading device 110 can comprise an EVC or data logger (DL). In the case of EVCs, a separate dedicated EVC is generally at each service location, where in the case of a DL, a single DL can receive meter data from a plurality of primary gas meters each having unique remote unit identifier (RUID). A DL generally has the capability to store gas meter data generally from up to 8 primary gas meters. Typically overall, there could be a few thousands (5,000 to 10,000) primary gas meters connected and the gas meter data from which will be received at the MDM server. A DL has similar functionality as that of an EVC, but has more memory and unlike a conventional EVC can support multiple gas meters which having unique RUIDs. In the system arrangement using DLs, each primary gas meter may be referred to as being a Remote Unit.

Primary gas meters 105 and 106 measure the volumetric flow rate (generally in cubic feet per minute (cfm) or in m³/hr) expressed as uncorrected gas volume data (UGVD) of a combustible gas such as natural gas (or other gas such methane or propane) typically over a time interval (typically 15 minutes) used by their associated service location. Most gas meters whether electronic or mechanical provide a pulsed output having a pulse count that corresponds to a particular UGVD of gas generally referred to as an "uncorrected volume".

The gas density is recognized to change as a function of state variables including pressure and temperature (as well as for composition changes for gas mixtures such as natural gas), and variations in these state variables can result in differences in energy content for like volumes of gas. Hence the UGVD is generally compensated for pressure, temperature (and if applicable and available the composition) variations and is represented as CGVD at standard conditions of pressure and temperature. The output data from the primary gas meter is also referred to as "interval data". Some primary gas meters have a local memory which enables the capability to provide accumulated gas meter readings for a particular interval of time, such as corresponding to a day, week or month.

From some primary gas meters, it is also possible to obtain the accumulated reading from a particular start time (start meter reading) for time interval defining a duration until an end time (end meter reading). There are a variety of primary gas meters of varied sophistication deployed to meter gas consumption. The simple mechanical gas meters provide only the pulse output reflecting the UGV flow rate of the gas. Ultrasonic primary gas meters typically deployed in custody transfer applications include local memory and are thus capable of providing a host of diagnostic information regarding the meter functioning and process conditions.

Gas data downloading device 110 generally performs temperature and pressure correction to generate CGVD from the UGVD and state variable data (typically temperature and pressure) received from the primary gas meters including primary gas meters 105 and 106. The gas volume at standard conditions is generally measured in standard cubic feet per minute (scfm) and is referred to as CGVD for a fixed duration of time (e.g., 15 minutes). Gas data downloading device 110 also has local memory that enables the capability to store gas meter data for a particular duration, accumulated gas meter (temperature, pressure, UGVD and CGVD) from a start and end time along with time stamps (typically time of use, ToU), and generate alarms in case of a detected error condition. When the gas data downloading device 110 is embodied as an EVC, each EVC in the system 100 will generally have a serial number (S/N) to enable a unique identification.

Regarding the communication link used in system 100, the communications network shown in FIG. 1 following gas data downloading device 110 comprises cellular tower 115 over a the wireless medium118 shown to a cellular operations center 120, then through a secure connection 122 to a utility operations center 130 which can include the MDM server 140 shown in FIG. 1. Although shown as being a wireless network connecting gas data downloading device 110 to utilities operation center 130, the gas data downloading device 110 (e.g., an EVC or DL) depending on the type and configuration may also have the capability to transmit gas meter data over a telephone network or Internet protocol (IP) network to utilities operation center 130. There are thus multiple possible modes of communication (including mixed modes) which can be used for transferring data from gas meters 105 and 106 to the MDM server 140. Each of these communication modes offers different bandwidth, reliability and cost of communication.

Regarding the data transfer mechanism, gas meter data (temperature, pressure, UGVD and CGVD) from the gas data downloading device 110 is generally transferred to the MDM communications server 140₂ based on a schedule defined by a call scheduler application that typically resides in MDM server 140. Generally, the interval data (both UGVD and CGVD), pressure, temperature, monthly data and additional information including device level diagnostics (e.g., alarm information) regarding the devices the MDM system involved transferring the gas meter data to the MDM server, as configured by the user in MDM application, which generally gets transferred once/twice or more frequently in each day. The duration of a 24 hr period is defined as "gas day" and the start and end times set (e.g., 8am to 8am next day) as per user' configuration. Similar is the case with monthly data also, if monthly gas data is accumulated and available at the gas data downloading device 110, it can be read once in a month as per the billing calendar configurable by the user of MDM application.

Device level diagnostics can be provided from primary gas meters comprising for example, ultrasonic primary gas meters which provide self diagnostic information about its health. Additional information can comprise alarm information from devices in the MDM system such as EVCs. A call scheduler application as part of the MDM server can obtain the additional information data remotely from the gas meters to MDM server, such as the additional information comprising there was a call failure and the gas meter data did not reach the MDM server. The additional information can also comprise diagnostic data from other similar primary gas meters, similar in the sense that they are geographically close (e.g., within a predetermined distance) or of the same type as the primary gas meter data under review, maintenance logs (e.g., from LDCs operations team), such as the log containing information that a section of pipeline is under repair, contract information that specifies the deviations in consumption allowed, global positioning system (GPS) or other location information regarding the primary gas meter.

Regarding data types, one aspect noted is that although the MDM system may obtain state variable data including the pressure, temperature and composition (if available) data along with UGVD and CGVD for the gas, depending on the application scenario there may be a need to validate the data corresponding to all these variables. This is because the CGVD, which is typically used for billing, is recognized as being a function of pressure and temperature, and if there are errors in these readings, they will propagate and influence the CGVD, whereas UGVD will not be affected by errors in the pressure and temperature data.

Hence gas meter data from the service locations reaches the MDM server 140 through various sub-systems and underlying applications. Any faults at these subsystems or applications generally affects the accuracy of the gas meter volume data. Also, apart from the gas meter data it is recognized that there is a host of other potentially useful information available within the MDM system that can be exploited to ensure enhanced reliability of the gas meter volume data. The details of this information depends on the MDM system' configuration and the application scenario.

On one end of the use case scenario, one might have a relatively sophisticated system where, high end primary gas meters (e.g. ultrasonic meters) are deployed at some locations that provide rich diagnostics information and the gas meter data (typically temperature, pressure and uncorrected volume data) is measured at greater frequency and arrives the MDM server 140 in near-real time, and also actual meter data backup may be available at field level (primary gas meter level) for several days. On the other hand, there could be a MDM system where there are mechanical meters that may not be able to send any diagnostic information and may not be sampled frequently which do not have a data backup at the field level (gas meter level) for the data. Disclosed embodiments provide GDV software and a scalable GDV system that addresses both these scenarios which meets the needs described above including considering alarms and other diagnostic information to identify gas meter data errors, as well as identifying the root cause of the errors. Also, disclosed embodiments include analyzing various fault scenarios in sub-systems that are involved in the obtaining the data provided to the MDM server of a MDM system, and incorporates a plurality of checks to detect them.

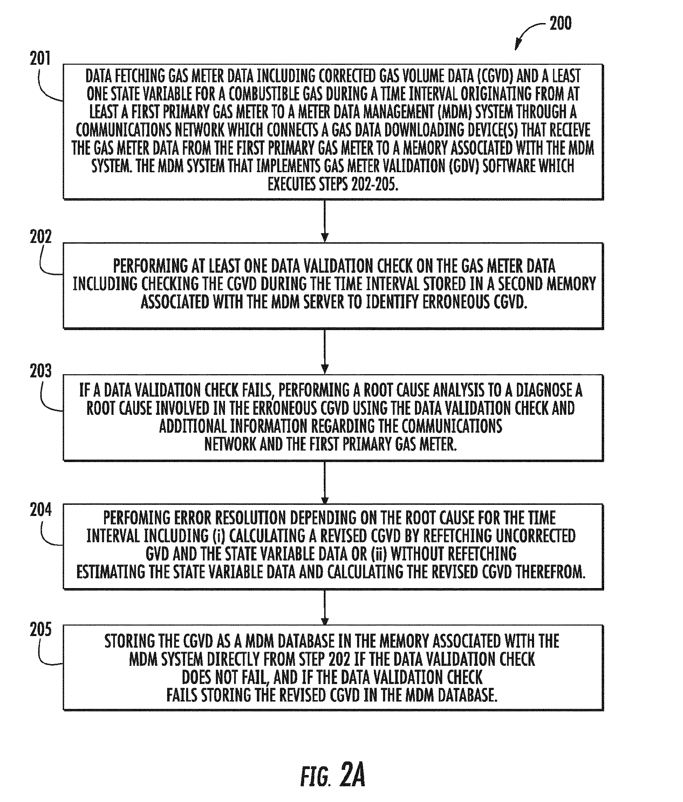

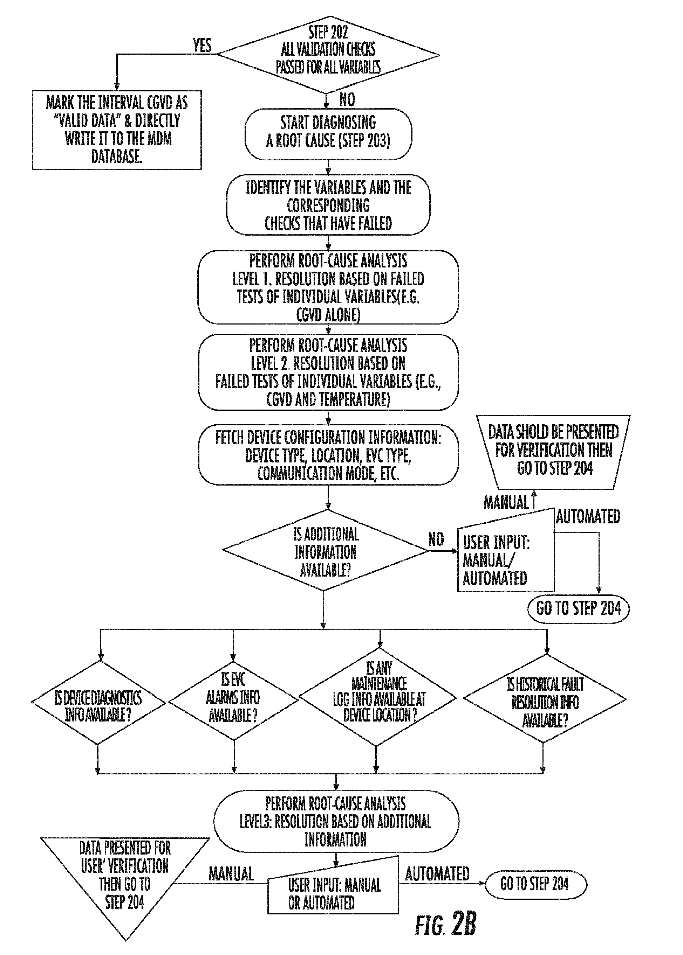

FIG. 2 is a flow chart that shows steps in a method 200 of GDV for a MDM system that includes at least one MDM server 140, a processor 140c, and a first memory 140a₁ that stores disclosed GDV software 140b. The processor 140c implements the GDV software which depending on user configuration can automatically execute steps 201-205 described below, where step 201 is a data fetching step, step 202 is a data validation step, step 203 is a root cause diagnosis step, step 204 is an error resolution step, and 205 is a data storage step.

Step 201 comprises fetching gas meter data originating from a plurality of primary gas meters. The minimal data used to perform the validation checks in step 202 is CGVD. UGVD and the state variables of pressure and temperature data can also be added as gas meter data fetched in step 201 so that the validation checks in step 202 can be performed on UGVD, pressure and temperature data, in addition to CGVD. The particular gas meter data parameter selection depends on user' configuration and the GDV software generally fetches the gas meter data for validation checks from the memory at the MDM server that houses the MDM database having the gas meter data including at least the CGVD, and generally also the UGVD, pressure and temperature data.

Step 202 comprises performing data validation checks on the gas meter data originating from a primary gas meter. The list of validation checks to be performed on the gas meter data available in the database can be arrived at through an analysis of the various sub-systems/devices involved in transferring the gas meter data from the primary gas meters to the MDM server. The analysis approach can comprise i) analysis of possible failure modes of each of the sub-systems ii) how these failures manifest in the gas meter data (data variations or signatures in the gas meter data), and iii) identification of validation checks that are able to detect these variations.

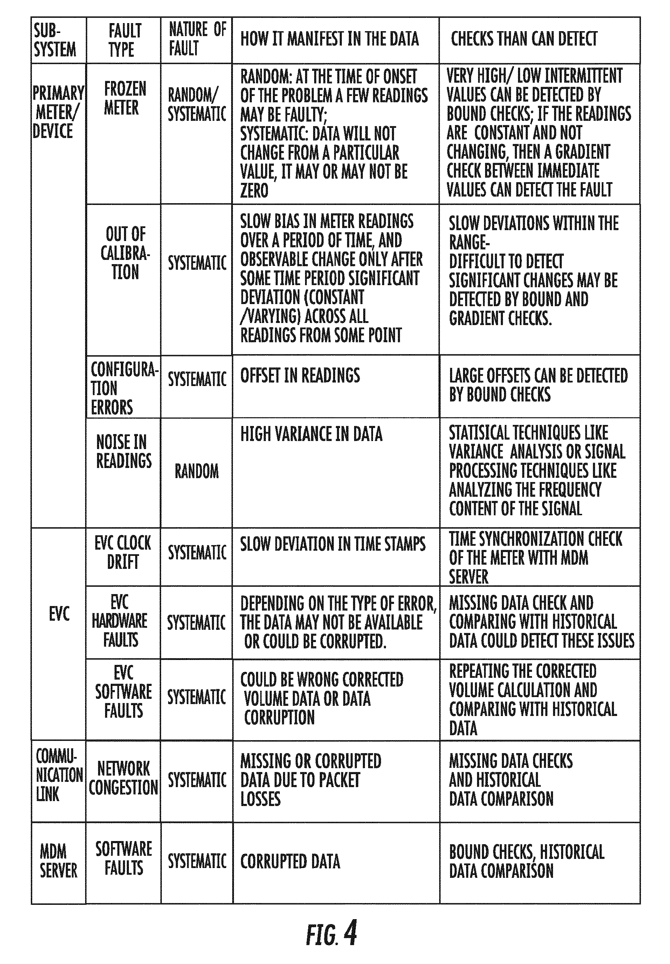

An illustration of such analysis is presented in the Examples section in FIG. 4 in the form of a table of example failure modes. The extent of detail involved in this analysis can depend on the context of deployment and the information that the user has on various failure modes of the various sub-systems/devices that are present. A minimal set of validation checks that are relevant for most of the scenarios independent of various subsystems involved and their failure modes are identified and provided in the Examples section. However, disclosed GDV software 140b generally offers flexibility to the end user to edit and appropriately augment additional validation checks depending on his or her own deployment scenario. Moreover, once the set of validation checks have been identified and configured for each of the RUID at the time installation and configuring of GDV software 140b, these checks are performed automatically by the GDV software 140b.

Example details of each of some example validation checks that can be used in step 202 are shown in text form in the Examples section. Step 203 comprises if at least one data validation check fails, performing a root cause analysis to diagnose a root cause involved in the erroneous CGVD using the data validation check and additional information including diagnostic information regarding said communications network and the first primary gas meter, while step 204 comprises performing error resolution which is described below. Depending on the user configuration, step 203 can be performed entirely automatically by the GDV software or in conjunction with a trained individual (e.g., an expert) in loop reviewing the root cause analysis results as shown in FIG. 2B.

Example details step 203 along with step 202 are explained below in FIG. 2B presented as a flow chart. As shown in FIG. 2B, if all the validation checks of step 202 are passed, the CGVD is considered to be valid data and the gas meter data including the CGVD is identified as validated data and which can then be directly written in the MDM database with no need to implement steps 203-204.

However, as noted above, it is possible that some of the sub-systems/devices in the MDM system (primary gas meters and/or gas data downloading devices 110 or communication links) may have more comprehensive diagnostics implemented as part of the device which will be indicating the health of the device and hence the validity of its reading in a more reliable way. Accordingly, one can verify for the availability of this information before accepting and storing the CGVD as validated CGVD.

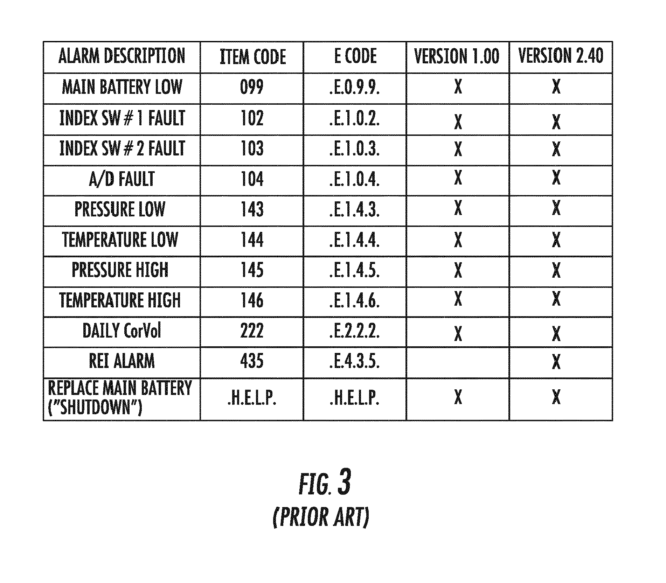

When one or more validation checks for respective gas data variables (e.g., CGVD, UGVD, pressure, and temperature) have not passed the validation step 202 checks as shown in FIG. 2B, the diagnosing the root cause step 203 is implemented followed by step 204 comprising error resolution depending on the additional information available, such as including the additional information comprising alarm information for an EVC shown in FIG. 3.

The root cause result provided by step 203 indicates at least one probable error cause(s) for the check(s) that have not passed in the data validation step 202. In one embodiment, the root cause analysis for identifying the error can be implemented using a fault tree model. A fault tree model enables a fault tree analysis (FTA) which is a top down, deductive failure analysis in which an undesired state of a system is analyzed using Boolean logic to combine a series of lower-level events. The low level events such as failures are propagated out towards system-level and observable behavior. They can include complex events as well as actual physical failures, and often use both AND logic and OR logic symbols. Each node in a fault tree can be assigned a failure probability so that the probability of the highest level effect can be computed and thus identified.

It is generally sufficient that the source of the error is narrowed down to failure in a sub-system/device (e.g., particular primary gas meter(s) and/or gas data downloading device, or communication link) as it helps in deciding the next steps. For example, if the source of the error is identified to be in a particular primary gas meter, then it may not be possible to obtain the gas meter data for the time period of interest and hence the CGVD would be estimated, whereas, if the source of the fault is identified as being in a communication link then the gas data can be refetched from the gas data downloading device 110 such as from an EVC or DL is available. In a similar fashion, if the source of the error is found be in temperature (or pressure) readings resulting in the CGVD to be erroneous, then the CGVD can be re-calculated from the UGVD using estimated temperature and/or estimated pressure values. As noted above the root cause analysis step 203 happens at various levels exploiting information available. The first level of resolution is based on the results of the validation checks for each of the variables for which the checks were carried out.

One method of diagnosing a root cause is through a rule-based system. In this approach, based on the error analysis performed in the diagnosis step 203, a set of rules are defined that indicate the most probable error source(s). For example, a series of missing data might indicate a fault in communication link with a high probability (e.g., due to packet loss in a wireless communication link). Similarly a completely constant (frozen) UGVD, pressure or temperature reading can occur because of a frozen primary measuring device. Based on these rules various sub-systems can be ranked in terms possible error sources. Such rules can defined after a preliminary failure mode analysis of various sub-systems/devices in the MDM system at a customer site and refined during the operation of the MDM system over a period of time. As noted above, the refinement can optionally include an expert reviewing the results at least during the initial deployment of the MDM system.

The second level of resolution can be used when more than gas meter data variable is subject to validation checks. The relationship between different variables of interest can be exploited to further resolve the error scenario. For example, the CGVD failing a few tests and the corresponding UGVD passing all the validation checks may indicate with a significant probability the source of the error can be in either pressure or temperature, or can be a software error. Also, missing data packets in both CGVD and UGVD for an interval of time might with greater probability reinforce the probability of the error being a communication link error. In a similar fashion rules can be defined based on gas meter data variables of interest and their underlying relationship to further enhance the resolution ability through refining the rankings (or probability ratings) of a first level resolution.

A third level of resolution which can be used is dependent on the additional information to further resolve the error source. The third level can be performed by reviewing the device configuration information. From the device configuration the GDV software can identify the type of primary gas meter device (e.g., turbine meter or mechanical meter), its location, and the type of gas data downloading devices 110 such as the type of EVC, the mode of communication through the communications network which was used for the gas meter data to reach the MDM server, and from data in the MDM database stored in a memory of the MDM server, historical data gas meter available along with its corresponding error history. Depending on a user' defined configuration, the GDV software can seek additional information from the MDM database and other sources as defined in the configuration. This step can optionally be performed with an expert in loop reviewing the additional information in the context of the resolution obtained in the previous steps. If this step is performed in a fully automated way by the GDV software, the additional information may be available in a codified in a form that can be interpreted by the GDV software. If this information is not available in this form, then codification can be a manual activity that can occur once at the time of GDV software configuration. For example, FIG. 3 is an example table showing alarm description information for EVC alarm codes which can be used as additional information to diagnose the root cause involved in erroneous CGVD data. This table is from MINI-MAX EVC Alarm Codes reproduced from Mini-AT High Performance, PTZ Electronic Volume Corrector, User Manual, October 2010.

The EVC table information EVC provided in FIG. 3 or similar information can be available at MDM server in a digital form where each bit can indicate a particular alarm condition. In this case the GDV software can interpret the EVC alarm information to further resolve the root cause.

More specifically, item code 146 in FIG. 3 indicates the EVC detecting the temperature to be high, and if the validation checks for temperature also indicates a failure then it can be concluded that temperature is one of the sources for the validation checks to fail. Moreover, if primary device diagnostics are available and they indicate no fault condition and also the UGVD passes all the validation checks, then a failure of the CGVD validation checks may have originated due to a faulty temperature reading. Then the conclusion reflected in the from the error analysis provided in root cause diagnosis step 203 can be to estimate the temperature data and using the estimated temperature data to recalculate the CGVD for the time interval of interest. These steps can be automated through a set of predefined rules that further enhances the probability scores obtained in the previous resolution levels.

Other known machine learning approaches such as Artificial Neural Networks also could be deployed for the diagnosis of the root cause. The training set comprised of output from all the validation checks of step 202 along with additional information and the corresponding historical data of identified root causes (e.g., by an expert) for errors could be used to train an artificial neural network and estimate the weights of the network. This trained network can be used when deployed as part of GDV solution, to infer the root cause for any given input data set comprising output of validation checks and corresponding additional information.

It is possible that each of these resolution levels might result in conflicting conclusions and hence the overall probability scores might become inconclusive. For example, there may be failures in the data validation checks in step 202 for UGVD and the primary device diagnostics also indicating some device level errors, but the CGVD may be passing all the validation checks. In this case a priority scheme can be defined wherein the CGVD is discarded despite data passing all the validation checks and the CGVD may instead be obtained by estimation. Priority based rules can be one of the approaches that may be implemented as part of GDV software to automatically resolve such conflicting scenarios. Another approach could be manual resolution under such conflicting scenarios. This can be decided as part of the GDV software configuration at the time of installation.

Step 204 comprises performing error resolution depending on the root cause determined in step 203 for the time interval of interest by (i) calculating a revised CGVD by refetching uncorrected GVD and the state variable data or (ii) without refetching, estimating the state variable data and calculating the revised CGVD therefrom. The context of the error can be used along with the root cause to determine whether to refetch or instead use estimates to calculate the CGVD. For example if the context is that a plurality of gas data validation tests have failed and the root cause analysis indicated that the error is with the primary gas meter, then the gas meter data can be estimated. Moreover, a confidence score can be given for each error detected (e.g., based on measurement uncertainty or a historical score card) and if it is less than a predetermined configurable value then the GDV system can automatically discard the CGVD and its value can instead be estimated.

In another context, if the error is instead in communication link, refetching of the gas meter data may be possible if the primary gas meter includes a local memory or the gas data downloading device includes a local memory. For example, it is generally possible to obtain the gas meter data from an EVC, where the EVC typically has a data backup.

The context of the error is also generally defined by who is seeking the gas meter data. If the billing department is seeking the gas meter data, and bill is needed to be generated by a defined date and time, if there is a failure in communication link, then the billing department may go ahead and estimate the erroneous CGVD and generate the bill for the current billing period and obtain the actual CGVD later on from the EVC or DL and correct the bill in the next bill. Whereas, if the LDC planning department is trying to estimate the supply/demand condition (e.g. demand forecasting application) using gas meter data is seeking gas meter data, they might prefer to wait till the actual meter data is refetched in case there is an error identified in meter data and the fault is not with primary meter or the gas data downloading device (e.g., a EVC).

Step 205 comprises storing the gas meter data including the CGVD in the MDM database directly from said step 202 if no data validation check fails, and if the data validation check fails the revised CGVD generated in step 204 is instead stored in the MDM database.

Another disclosed aspect is the presentation of exceptions (e.g., grouping) such that the GDV system user can resolve exceptions promptly without significantly impacting productivity. The GDV software can provide the customer the flexibility to select a set of the exceptions that are to be reported for an expert's review and which can automatically be considered for manual editing or automatic estimation. The customers can be able to change these options at any time during the operation of the GDV system. Also, along with the exception the report, there can be brief statistics for each of the exceptions on when they last occurred, its frequency and the resolution taken. The GDV software can also recommend a suggested course of action for the exceptions, if requested by the user. Also, the exceptions may be appropriately color coded for a color coded display for the user and there also can be provided a snapshot of actual gas meter data in the form of a plot or suitable graphic.

It is noted usually gas meter data such as the state variables of temperature and pressure for the gas, as well as alarms and diagnostic information is conventionally scattered in disparate systems and disclosed embodiments recognize integrating all this information can enhance the confidence in the assessment provided by the GDV software. Also incorporating fault models of various subsystems into the GDV software can enhance its reliability. One disclosed aspect is to integrate this additional information with the validation checks either to automate the decision making process in terms of handling exceptions or the decision making process can be presented to the user along with exception information for him or her to resolve the exception.

As described above, disclosed GDV software can be implemented as an application in a MDM system such as system 100 shown in FIG. 1. In this way, the MDM system will be fetching the gas meter data and can select the gas meter data for storage only if it passes the data validation checks (step 201) as part of the MDM database stored in its memory. Another approach can be the data validation checks being an independent application offered as a service for LDCs.

### EXAMPLES

Disclosed embodiments are further illustrated by the following specific Examples, which should not be construed as limiting the scope or content of this Disclosure in any way.

Described below are example data validation checks (step 202) that can be performed on the data originating from a selected primary gas meter. The gas meter data can be one or more of UGVD, CGVD, pressure and temperature data.

For a device time check, the objective is to ensure that the device clock and MDM server clock are in sync. Typically this can be done by ensuring that both the device and MDM server clocks are synchronized to a global reference clock. In this validation check, the record for that synchronization activity is validated.

A device identification check is to ensure that the data corresponding to the correct t device is being validated. This can be done by cross validating the device serial number in MDM server with the serial number present in the data. A bounds check can be verified whether all the gas meter data is within pre-defined upper and lower bounds. These bounds could be decided based on the maximum and minimum possible values that could be read by the primary gas meter or also based on the maximum and minimum allowable values (e.g., based on contract for meter data) for the gas meter data variables of interest.

An accumulated data check is applicable mostly for primary gas meters or EVCs that are store gas meter data so that they are capable of providing both interval readings and accumulated readings for a particular interval. The duration for which accumulated readings are read (typically for a gas day), the corresponding interval readings should add-up to accumulated value within an acceptable tolerance for the meter.

A spike check can b e used to identify unusually large gas meter data values. This is typically performed by calculating the highest value and the third highest value in the data set under validation. The absolute difference between these two values should be within a predefined limit. In a gradient check the difference between successive gas meter data values can be calculated and the absolute difference is expected to be within a particular bound.

Regarding a zero/frozen value check, it is expected that the gas meter data has certain variation. If certain predefined numbers of successive gas meter data point values are not changing then it may considered to be an error condition A check can also be to determine the gas meter data has any improper zero values, which can be the basis of other errors.

In a historical data check, the average value for a particular gas meter data set is calculated and the result compared with the historical average corresponding to similar dates corresponding to previous week or month for the same duration. The absolute difference between these values can be compared to a particular bound to determine if errors are present.

FIG. 3 is a table showing example alarm information provided by a Mercury Instruments EVC that can be used in step 203 to diagnose the root cause of the error involved in the erroneous CGVD data. FIG. 4 is a table showing example errors that can cause the erroneous CGVD data.

While various disclosed embodiments have been described above, it should be understood that they have been presented by way of example only, and not limitation. Numerous changes to the subject matter disclosed herein can be made in accordance with this Disclosure without departing from the spirit or scope of this Disclosure. In addition, while a particular feature may have been disclosed with respect to only one of several implementations, such feature may be combined with one or more other features of the other implementations as may be desired and advantageous for any given or particular application.

As will be appreciated by one skilled in the art, the subject matter disclosed herein may be embodied as a system, method or computer program product. Accordingly, this Disclosure can take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, this Disclosure may take the form of a computer program product embodied in any tangible medium of expression having computer usable program code embodied in the medium.

Any combination of one or more computer usable or computer readable medium(s) may be utilized. The computer-usable or computer-readable medium may be, for example, but not limited to, an electronic, magnetic, optical, electromagnetic, infrared, or semiconductor system, apparatus, or device. More specific examples (a non-exhaustive list) of the computer-readable medium would include non-transitory media including the following: an electrical connection having one or more wires, a portable computer diskette, a hard disk, a random access memory (RAM), a read-only memory (ROM), an erasable programmable read-only memory (EPROM or Flash memory), a portable compact disc read-only memory (CDROM), an optical storage device, or a magnetic storage device.

## Claims

1. A method (200) of data validation for a Meter Data Management (MDM) system (100), comprising:
said MDM system including a communications network (115, 118) communicably connecting at least one gas data downloading device (110) receiving gas meter data including corrected gas volume data (CGVD) and at least one state variable for a combustible gas during a time interval from at least a first primary gas meter to said MDM system, said MDM system including at least one MDM server (140) having a processor (140c) implementing gas data validation (GDV) software (140b) stored in a first memory (140a₁) and a second memory (140a₂) storing said gas meter data, said GDV software implementing said method, said method including:
performing (202) at least one data validation check on said gas meter data including checking said CGVD during said time interval to identify erroneous CGVD;
if at least one data validation check fails, performing (203) a root cause analysis to diagnose a root cause involved in said erroneous CGVD using said data validation check and additional information including diagnostic information regarding said communications network and said first primary gas meter, and
performing (204) error resolution depending on said root cause for said time interval by (i) calculating a revised CGVD by refetching uncorrected GVD and data for said state variable (state variable data) or (ii) without said refetching estimating said state variable data and calculating said revised CGVD therefrom.

2. The method of claim 1, wherein said state variable data comprises pressure data and temperature data.

3. The method of claim 1, wherein said combustible gas comprises natural gas.

4. The method of claim 1, wherein said performing said root cause analysis comprises implementing a fault tree model.

5. The method of claim 1, wherein said root cause includes an error with said first primary gas meter, an error with said gas data downloading device, or an error in said communications network.

6. The method of claim 5, wherein said root cause is in said communications network, and wherein said refetching said uncorrected GVD and said state variable data is from a local memory at said first primary gas meter having or a local memory at said gas data downloading device.

7. The method of claim 1, further comprising storing said CGVD in a MDM database in said second memory (140a₂) directly if said data validation check does not fail, and if said data validation check fails storing said revised CGVD in said MDM database.

8. The method of claim 1, wherein said second memory stores a historical log recording said time interval, said first primary gas meter, and said root cause, further comprising using said historical log to update said GDV software:

9. A computer program product, comprising:
a non-transitory data storage medium which includes program instructions executable by a processor (140c) to implement a method (200) of gas data validation (GDV) for a Meter Data Management (MDM) system including a communications network (115, 118) communicably connecting at least one gas data downloading device (110) receiving gas meter data including corrected gas volume data (CGVD) and at least one state variable for a combustible gas during a time interval from at least a first primary gas meter (105, 106) to said MDM system, said MDM system including at least one MDM server (140) having said processor and a second memory (140a₂) storing said gas meter data, said method including:
performing (202) at least one data validation check on said gas meter data including checking said CGVD during said time interval to identify erroneous CGVD;
if at least one data validation check fails, performing (203) a root cause analysis to diagnose a root cause involved in said erroneous CGVD using said data validation check and additional information including diagnostic information regarding said communications network and said first primary gas meter, and
performing (204) error resolution depending on said root cause for said time interval by (i) calculating a revised CGVD by refetching uncorrected GVD and said state variable data or (ii) without said refetching estimating said state variable data and calculating said revised CGVD therefrom.

10. The computer program product of claim 9, wherein said state variable data comprises pressure data and temperature data.

11. The computer program product of claim 9, wherein said performing said root cause analysis comprises implementing a fault tree model.

12. The computer program product of claim 11, wherein said root cause includes an error with said first primary gas meter, an error with said gas data downloading device, or an error in said communications network.
